# EUROPEAN PATENT SPECIFICATION

(11) **EP 1 548 329 B1**
(45) Date of publication and mention of the grant of the patent: **14.02.2007**
(21) Application number: 04030001.4
(22) Date of filing: 17.12.2004
(51) Int. Cl.: F16H 55/06, F16H 55/14, F16H 55/18

(54) **Resin Gear**
Zahnrad aus Harz
Elément denté en résine

(30) Priority: 19.12.2003 JP 2003422581
(43) Date of publication of application: 29.06.2005
(73) Proprietor: ENPLAS CORPORATION, Kawaguchi-shi, Saitama 332-0034 (JP)
(72) Inventor: Takeuchi, Yoichi, Kawaguchi-shi Saitama 333-0816 (JP)
(74) Representative: Manitz, Finsterwald & Partner GbR

(56) References cited:
- EP-A- 1 344 962
- SU-A1- 823 716
- US-A- 1 666 576
- US-A- 2 207 290
- US-A- 3 300 835
- US-A- 3 371 549
- US-A- 4 149 431
- PATENT ABSTRACTS OF JAPAN vol. 2003, no. 12, 5 December 2003 (2003-12-05) -& JP 2004 237843 A (KOYO SEIKO CO LTD), 26 August 2004 (2004-08-26)
- PATENT ABSTRACTS OF JAPAN vol. 008, no. 234 (M-334), 26 October 1984 (1984-10-26) & JP 59 113370 A (MATSUSHITA DENKI SANGYO KK), 30 June 1984 (1984-06-30)

## Description

### BACKGROUND OF THE INVENTION

### Field of the Invention

The present invention generally relates to a resin gear constituting a power transmission device. More specifically, the invention relates to a resin gear capable of eliminating backlash so as to smoothly and precisely transmit rotation without backlash.

### Description of the Prior Art

In general, gears are designed to provide backlash so as to be capable of smoothly rotating while meshing with a companion gear, in view of manufacturing tolerance, deformation of teeth, meshing deviation due to deflection of shaft, and so forth. However, since backlash is provided by a clearance between teeth of a pair of gears meshing with each other, if rotation and stop are frequently repeated or if normal rotation and reverse rotation are repeated, teeth meshing with each other collide with each other to produce noises. In sensors or the like for measuring rotation transmitted by gears, errors of rotation due to backlash are directly measurement errors, so that backlash is preferably as small as possible.

Therefore, in each of gears disclosed in Japanese Patent Laid-Open Nos. 2000-220669, 8-233071 and 63-19470, a rim having teeth and a hub having an axial hole are connected to each other by means of a plurality of flexibly deformable ribs which are designed to be flexibly deformed to press the gear against a meshing companion gear to cause the pair of gears meshing with each other to tightly contact each other to remove backlash caused between the gears.

According to such gears, the contact pressure between the tooth flanks of teeth of the gear and meshing companion gear is caused by the elastic force of the ribs, so that the elastic deformation of the ribs can displace the teeth in such a direction that the gear is disengaged from the companion gear. Therefore, it is expected to allow smooth transmission of rotation without causing defective rotation due to elimination of backlash.

However, in such conventional gears, since the ribs connecting the rim to the hub can be elastically deformed so as to allow the relative rotational displacement between the rim and the hub, the ribs are flexibly deformed by rotational torque during power transmission, so that the rim and the hub are displaced in rotational directions by the elastic deformation of the rim. If such displacement in rotational directions is caused, measurement errors of rotational displacement are caused when the rotational displacement of a shaft, which is fitted into the axial hole of the hub so as to be rotatable therewith, is measured by a sensor, for example.

The document US-A-4 149 431 shows a resin gear with all the features of the preamble of independent claim 1.

### SUMMARY OF THE INVENTION

It is therefore an object of the present invention to eliminate the aforementioned problems and to provide a resin gear capable of eliminating backlash and more precisely transmitting rotation than conventional gears.

In order to accomplish the aforementioned and other objects, according one aspect of the present invention, a resin gear comprises: a rim having teeth on an outer periphery thereof; a shaft supporting portion for receiving and supporting therein a shaft; and a substantially disk-shaped web connecting an inner surface of the rim to an outer surface of the shaft supporting portion, the web having a thin portion which is thinner than the rim and which is curved in facewidth directions, the thin portion being elastically deformable so as to allow a relative displacement in radial directions between the rim and the shaft supporting portion.

In this resin gear, the web is connected to a substantially central portion of the inner surface of the rim in facewidth directions and to a substantially central portion of the outer surface of the shaft supporting portion in facewidth directions. The thin portion may be elastically deformable so as to prevent a relative displacement in rotational directions between the rim and the shaft supporting portion. The thin portion extends in circumferential directions while being corrugated in facewidth directions. The thin portion may have a substantially constant thickness. The thin portion may be made of a material different from that of the rim and the shaft supporting portion. The rim, the shaft supporting portion and the web may be formed so as to be integrated with each other.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a longitudinal section of a preferred embodiment of a resin gear according to the present invention, which is taken along line I-I of FIG. 2;
FIG. 2 is a front view of the resin gear in the preferred embodiment;
FIG. 3 is a schematic enlarged view of a tooth of the resin gear in the preferred embodiment when the gear meshes with a companion gear;
FIG. 4 is a sectional view of a first modified example of a resin gear according to the present invention, which corresponds to FIG. 1;
FIG. 5 is a sectional view of a second modified example of a resin gear according to the present invention, which corresponds to FIG. 1; and

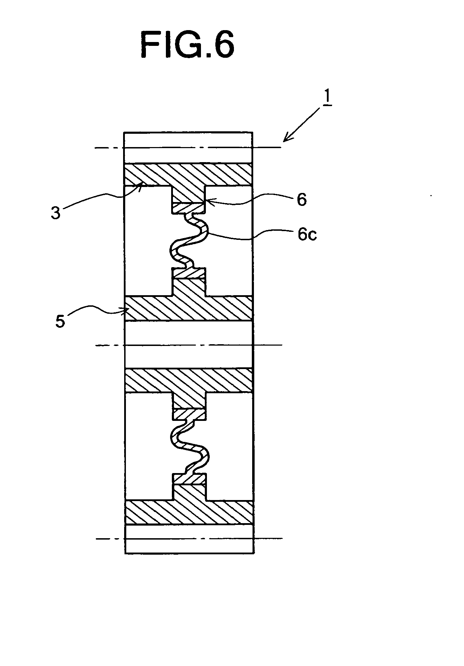

FIG. 6 is a sectional view of a third modified example of a resin gear according to the present invention, which corresponds to FIG. 1.

### DESCRIPTION OF THE PREFERRED EMBODIMENTS

Referring now to the accompanying drawings, the preferred embodiment of a resin gear according to the present invention will be described below in detail.

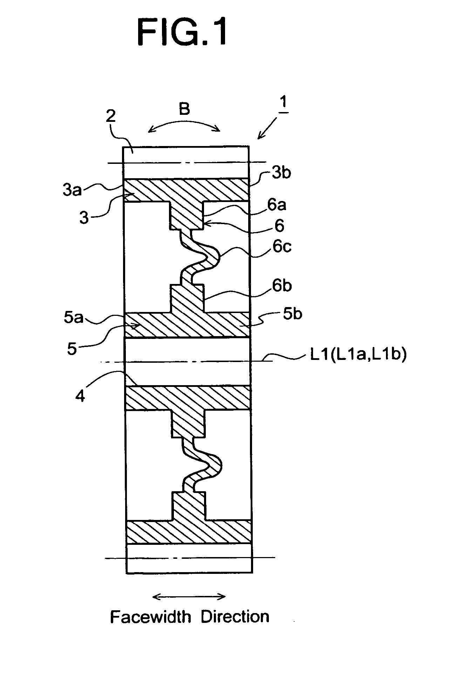

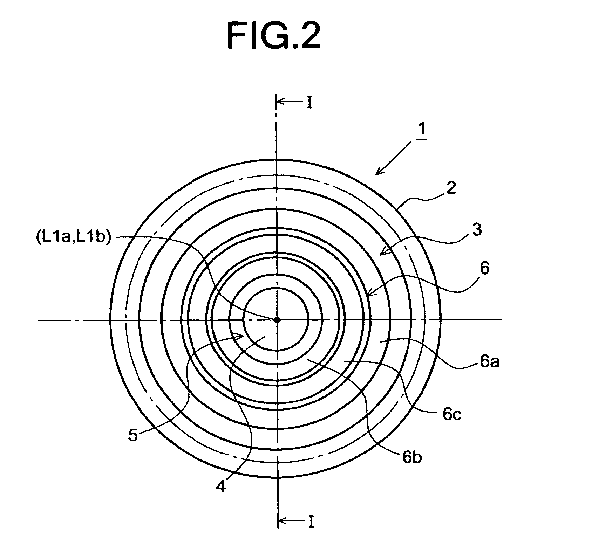

FIGS. 1 and 2 show the preferred embodiment of a resin gear 1 according to the present invention. FIG. 1 is a longitudinal section of the resin gear 1 taken along line I-I of FIG. 2, and FIG. 2 is a front view of the resin gear 1.

In these figures, the resin gear 1 is formed of, e.g., polyacetal, polyamide, polyphenylene sulfide or polybutylene terephthalate, by injection molding. The resin gear 1 comprises a rim 3 having teeth 2 on its outer periphery, a substantially cylindrical hub (a shaft supporting portion) 5 having an axial hole 4 at its center, and a web 6 connecting the rim 3 to the hub 5 in radial directions. In this preferred embodiment, the length of the hub 5 in directions of its axis (L1) is the same as the facewidth of the gear, and both ends 5a and 5b of the hub 5 in axial directions are substantially arranged on the same plates as those of both ends 3a and 3b of the rim 3 in facewidth directions, respectively.

The web 6 has a connecting portion 6a to the rim 3, and a connecting portion 6b to the hub 5. The connecting portions 6a and 6b substantially have the same thickness as that of the rim 3 and hub 5, and have a substantially annular shape. The connecting portions 6a and 6b of the web 6 are connected to each other by means of an elastically deformable portion 6c which is thinner than the connecting portions 6a and 6b. That is, a part of the web 6 in radial directions is the thin elastically deformable portion 6c. Furthermore, the connecting portions 6a and 6b are connected to the substantially central portion of the rim 3 in facewidth directions, and to the substantially central portion of the hub 5 in axial directions, respectively.

The elastically deformable portion 6c of the web 6 is curved in a facewidth direction (to the right in FIG. 1), and is designed to be flexibly deformed so as to allow the relative displacement of the rib 3 and hub 5 in radial directions. The outside end of the elastically deformable portion 6c in radial directions is connected to the substantially central portion of the outside connecting portion 6a in facewidth directions, and the inside end of the elastically deformable portion 6c in radial directions is connected to the substantially central portion of the inside connecting portion 6b in facewidth directions. Thus, if the elastically deformable portion 6c is elastically deformed, the elastic force of the elastically deformable portion 6c presses the substantially central portion of the rim 3 in facewidth directions, so that torque or angular moment in directions of arrow B in FIG. 1 does not act on the rim 3. As a result, the teeth 2 of the rim 3 can contact the teeth of a meshing companion gear (not shown) at uniform contact pressures in facewidth directions, so that it is possible to prevent biased wear from being caused by unbalanced contact pressures.

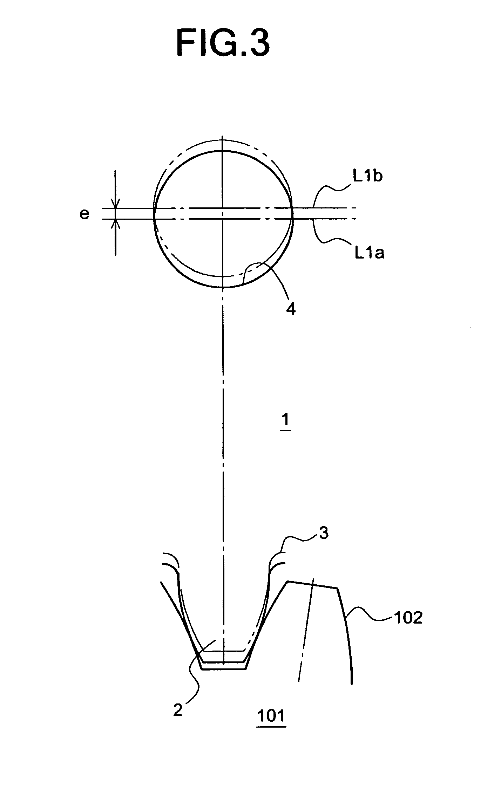

FIG. 3 is a schematic enlarged view of the resin gear 1 in this preferred embodiment when the gear 1 meshes with a companion gear 101. As shown in FIG. 3, the resin gear 1 in this preferred embodiment is mounted so that the center L1a of the axial hole 4 (the rotation center of the hub 5) is eccentrically arranged with respect to the rotation center L1b of the rim 3 toward the companion gear 101. In view of variation in precision of tooth profile, variation in dimension between the shafts of the meshing gears 1 and 101 and so forth, the eccentric amount (thedisplacementbetween the rotation centers) e is so set as to be capable of eliminating backlash and causing the tooth flanks of the meshing teeth 2 and 102 to tightly contact each other without clearance (see FIG. 3).

Thus, in the resin gear 1 in this preferred embodiment, apartof the elasticallydeformableportion 6c arranged between the hub 5 and the companion gear 101 is compressed to be elastically deformed to press the rim 3 against the companion gear 101 by the elastic force thereof. Thus, the meshing state of the resin gear 1 in this preferred embodiment with the companion gear 101 is maintained (see FIG. 3).

Furthermore, the optimum thickness of the elastically deformable portion 6c is determined in accordance with various conditions, such as module, outside dimension and contact pressure between the meshing teeth 2 and 102.

In the resin gear 1 in this preferred embodiment with this construction, the part of the web 6 is the thin elastically deformable portion 6c which is curved in facewidth directions, so that the elastic deformation of the elastically deformable portion 6c allows the relative displacement of the hub 5 and rim 3 in radial directions. However, the elastically deformable portion 6c has a substantially (annular) disk shape to have very high rigidity in rotational directions, so that it is possible to prevent the relative displacement in rotational directions between the hub 5 and the rim 3.

Thus, according to the resin gear 1 in this preferred embodiment, it is possible to transmit rotation while eliminating backlash, and it is possible to prevent the relative displacement in rotational directions between the rim 3 and the hub 5, so that it is possible to smoothly and precisely transmit rotation.

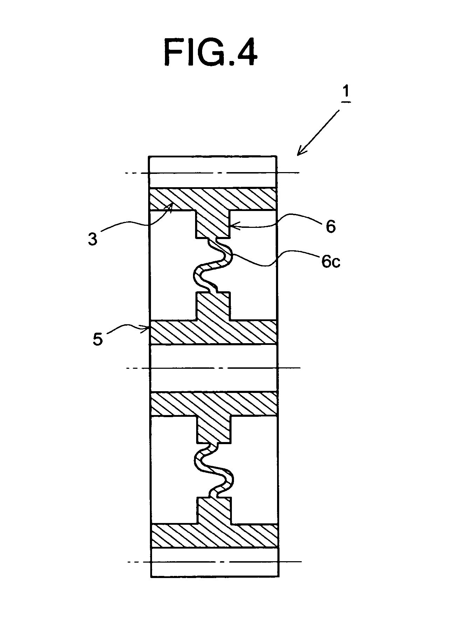

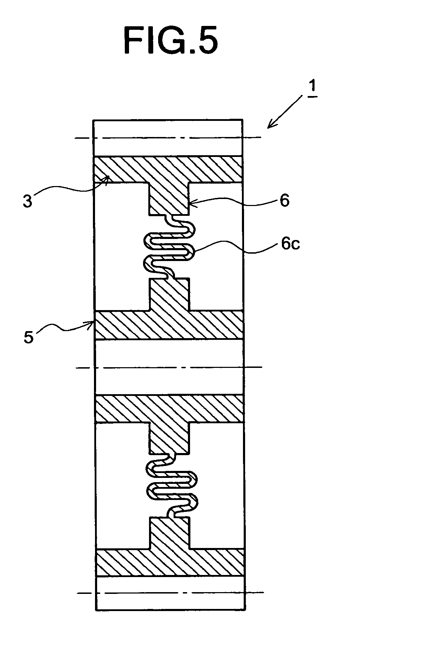

While the elastically deformable portion 6c has been formed so as to have only one curved deformable portion in the above described preferred embodiment, the present invention should not be limited thereto, but the elastically deformable portion 6c may have a plurality of curved deformable portions in radial directions. For example, two curved deformable portions maybe sequentially formed in radial directions as shown in FIG. 4, or four curved deformable portions may be sequentially formed in radial directions as shown in FIG. 5. Alternatively, the elastically deformable portion 6c may be formed of an easily deformable material (a material having a large elastic modulus) which is different from the material of the rim 3 and hub 5.

While the part of the web 6 has been the elastically deformable portion 6c in the above described preferred embodiment, the whole web 6 may be elastically deformable. Such a construction can be effectively applied to a resin gear having a small diameter.

While the axial hole 4 has been formed in the hub 5 in the above described preferred embodiment, the present invention should not be limited thereto, but the hub 5 may be integrally formed with a supporting shaft (not shown).

The resin gear according to the present invention may be widely used for power transmission devices required to smoothly and precisely transmit rotation. In particular, if the resin gear according to the present invention is used for a rotational displacement measuring portion of precise measuring apparatuses and instruments, it is possible to improve the precision of measurement.

## Claims

1. A resin gear (1) comprising:
a rim (3) having teeth (2) on an outer periphery thereof;
a shaft supporting portion (5) for receiving and supporting therein a shaft; and
a substantially disk-shaped web (6) connecting a radially inner surface of said rim (3) to a radially surface of said shaft supporting portion (5),
**characterized in that,**
said web (6) has a pair of substantially annular connecting portions (6a, 6b), the thickness of each of the pair of substantially annular connecting portions (6a, 6b) in facewidth directions being substantially equal to the thickness of said rim (3) in radial directions, and a thin portion (6c), which is thinner than said connecting portions (6a, 6b) in face width directions and which extends in circumferential directions while being corrugated in facewidth directions,
one (6a) of said connecting portions (6a, 6b) is connected to a substantially central portion of said radially inner surface of said rim (3) in facewidth direction, and the other (6b) of said connecting portions (6a, 6b) is connected to a substantially central portion of said radially outer surface of said shaft supporting portion (5) in facewidth direction,
one end of said thin portion (6c) is connected to a substantially central portion of a radially inner surface of said one (6a) of said connecting portions (6a, 6b) in facewidth direction, and the other end of said thin portion (6c) is connected to a substantially central portion of a radially outer surface of the other (6b) of said connecting portions (6a, 6b) in facewidth direction,
said thin portion (6c) being elastically deformable so as to allow a relative displacement in radial directions between said rim (3) and said shaft supporting portion (5).

2. A resin gear as set forth in claim 1, wherein said thin portion is elastically deformable so as to prevent a relative displacement in rotational directions between said rim and said shaft supporting portion.

3. A resin gear as set forth in claim 1, wherein said thin portion has a substantially constant thickness.

4. A resin gear as set forth in claim 1, wherein said thin portion is made of a material different from that of said rim and said shaft supporting portion.

5. A resin gear as set forth in claim 1, wherein said rim, said shaft supporting portion and said web are formed so as to be integrated with each other.

## Patentansprüche

1. Zahnrad (1) aus Harz, umfassend:
einen Kranz (3) mit Zähnen (2) an einem Außenumfang desselben;
einen Wellentragabschnitt (5), um darin eine Welle aufzunehmen und zu tragen; und
einen im Wesentlichen scheibenförmigen Steg (6), der eine radial innere Fläche des Kranzes (3) mit einer radial äußeren Fläche des Wellentragabschnitts (5) verbindet,
**dadurch gekennzeichnet, dass**
der Steg (6) ein Paar im Wesentlichen kreisringförmige Verbindungsabschnitte (6a, 6b) aufweist, wobei die Dicke eines jeden Verbindungsabschnitts des Paares von im Wesentlichen kreisringförmigen Verbindungsabschnitten (6a, 6b) in Richtungen der Stirnflächenbreite im Wesentlichen gleich der Dicke des Kranzes (3) in radialen Richtungen ist, und einen dünnen Abschnitt (6c) aufweist, der dünner als die Verbindungsabschnitte (6a, 6b) in Richtungen der Stirnflächenbreite ist und der sich in Umfangsrichtungen erstreckt, wobei er in Richtungen der Stirnflächenbreite gewellt ist,
einer (6a) der Verbindungsabschnitte (6a, 6b) mit einem im Wesentlichen zentralen Abschnitt der radial inneren Fläche des Kranzes (3) in Richtung der Stirnflächenbreite verbunden ist, und der andere (6b) der Verbindungsabschnitte (6a, 6b) mit einem im Wesentlichen zentralen Abschnitt der radial äußeren Fläche des Wellentragabschnitts (5) in Richtung der Stirnflächenbreite verbunden ist,
ein Ende des dünnen Abschnitts (6c) mit einem im Wesentlichen zentralen Abschnitt einer radial inneren Fläche des einen (6a) der Verbindungsabschnitte (6a, 6b) in Richtung der Stirnflächenbreite verbunden ist, und das andere Ende des dünnen Abschnitts (6c) mit einem im Wesentlichen zentralen Abschnitt einer radial äußeren Fläche des anderen (6b) der Verbindungsabschnitte (6a, 6b) in Richtung der Stirnflächenbreite verbunden ist, und dass
der dünne Abschnitt (6c) elastisch verformbar ist, um eine relative Verschiebung zwischen dem Kranz (3) und dem Wellentragabschnitt (5) in radialen Richtungen zuzulassen.

2. Zahnrad aus Harz nach Anspruch 1, wobei der dünne Abschnitt elastisch verformbar ist, um eine relative Verschiebung zwischen dem Kranz und dem Wellentragabschnitt in Drehrichtungen zu verhindern.

3. Zahnrad aus Harz nach Anspruch 1, wobei der dünne Abschnitt eine im Wesentlichen konstante Dicke aufweist.

4. Zahnrad aus Harz nach Anspruch 1, wobei der dünne Abschnitt aus einem Material hergestellt ist, das sich von dem des Kranzes und des Wellentragabschnitts unterscheidet.

5. Zahnrad aus Harz nach Anspruch 1, wobei der Kranz, der Wellentragabschnitt und der Steg derart gebildet sind, dass sie miteinander integriert sind.

## Revendications

1. Roue dentée en résine (1), comprenant :
une jante (3) ayant une dent (2) sur sa périphérie extérieure ;
une portion de support d'arbre (5) pour recevoir et pour supporter à l'intérieur un arbre ; et
un voile sensiblement en forme de disque (6) qui connecte une surface radialement intérieure de ladite jante (3) à une surface radialement extérieure de ladite portion de support d'arbre (5),
**caractérisée en ce que**
ledit voile (6) comporte une paire de portions de connexion sensiblement annulaires (6a, 6b), l'épaisseur de chacune des portions de connexion de ladite paire de portions de connexion sensiblement annulaires (6a, 6b), dans la direction de la largeur faciale, étant sensiblement égale à l'épaisseur de ladite jante (3) dans la direction radiale, et une portion mince (6c) qui est plus mince que lesdites portions de connexion (6a, 6b) dans la direction de la largeur faciale et qui s'étend en direction circonférentielle tout en étant ondulée dans la direction de la largeur faciale,
l'une (6a) desdites portions de connexion (6a, 6b) est connectée à une portion sensiblement centrale de ladite surface radialement intérieure de ladite jante (3) dans la direction de la largeur faciale, et l'autre (6b) desdites portions de connexion (6a, 6b) est connectée à une portion sensiblement centrale de ladite surface radialement extérieure de ladite portion de support d'arbre (5) dans la direction de la largeur faciale,
une extrémité de ladite portion mince (6c) est connectée à une portion sensiblement centrale d'une surface radialement intérieure de ladite portion de connexion (6a) desdites portions de connexion (6a, 6b) dans la direction de la largeur faciale, et l'autre extrémité de ladite portion mince (6c) est connectée à une portion sensiblement centrale d'une surface radialement extérieure de l'autre (6b) desdites portions de connexion (6a, 6b) dans la direction de la largeur faciale,
ladite portion mince (6c) étant élastiquement déformable de manière à permettre un déplacement relatif en direction radiale entre ladite jante (3) et ladite portion de support d'arbre (5).

2. Roue dentée en résine selon la revendication 1, dans laquelle ladite portion mince est élastiquement déformable de manière à prévenir un déplacement relatif dans des directions de rotation entre ladite jante et ladite portion de support d'arbre.

3. Roue dentée en résine selon la revendication 1, dans laquelle ladite portion mince a une épaisseur sensiblement constante.

4. Roue dentée en résine selon la revendication 1, dans laquelle ladite portion mince est réalisée en un matériau différent de celui de ladite jante et de ladite portion de support d'arbre.

5. Roue dentée en résine selon la revendication 1, dans laquelle ladite jante, ladite portion de support d'arbre, et ledit voile sont formés de manière à être intégrés les uns avec les autres.
